# EUROPEAN PATENT SPECIFICATION

(11) **EP 0 569 072 B1**
(45) Date of publication and mention of the grant of the patent: **23.07.1997**
(21) Application number: 93201052.3
(22) Date of filing: 09.04.1993
(51) Int. Cl.: B65G 17/06, B65G 23/06, B65G 15/02

(54) **Chain for conveyor systems**
Kette für ein Fördersystem
Chaîne pour un système de transport

(30) Priority: 07.05.1992 IT RE920039 U
(43) Date of publication of application: 10.11.1993
(73) Proprietor: BETT SISTEMI s.r.l., 41012 Carpi (Modena) (IT)
(72) Inventor: Bettati, Tienno, c/o Marbett S.p.A., I-42015 Coreggio, Reggio Emilia (IT); Ferrari, Fabrizio, c/o Marbett S.p.A., I-42015 Correggio, Reggio Emilia (IT)
(74) Representative: Corradini, Corrado

(56) References cited:
- GB-A- 2 056 400
- GB-A- 2 127 372
- US-A- 3 768 631
- US-A- 4 276 980
- US-A- 4 436 200

## Description

This invention concerns a perfected conveyor chain.

In particular, the invention relates to those chains whose links can oscillate both at a right angle to and parallel to their lying position, in such a way as to be able to close in a ring according to both said reciprocally right-angled directions.

There are known conveyor chains, to which this present invention refers particularly, whose links are composed of a shaped element obtained by the molding of a synthetic material such as acetal resin.

The links of said known chains include a body which is in the shape of a fork and a monolithic plate which is used to close the aperture defined by said fork, from the part of the latter that defines the active zone or conveying zone of the link.

In particular, the crosspiece of said fork is shaped like a bush from whose end two divergent shaped arms derive, and inside which a rotating cylindrical body is inserted that is at a right angle to the plane of the link.

The bush of the link of chain that follows is inserted between the two arms, and transversally to said arms there is a cylindrical pin that, crossing the bush and the respective cylindrical body, connects the two links. Said cylindrical pin is inserted into a diametral hole of said cylindrical body, and in a seat of articulation and oscillation which is formed in the bush of the link of chain that follows, and that is shaped, in right-angle section, like a slot whose lying plane is at a right angle to that of the link.

Thanks to this slot-shaped seat and the cylindrical pin, the link can oscillate both at a right angle to and parallel to its own lying position, as described in the introduction.

In said known chains, the teeth of the links that engage with a drawing pinion that makes it possible for the chain to follow curves contained in the plane of the links, are made available by projecting elements on the outside of the arms of said fork. There are known chains, for example, in which said projecting elements are composed of two coaxial hollow tangs that are monolithic with said arms, and that take in the opposite ends of the pin. The respective drawing pinion is cup-shaped, and more precisely includes a circular plate that has a circumferential series of teeth or posts on the periphery that are equidistant and situated at a right angle to the plate.

However, the presence of said projecting elements, like the aforementioned hollow tangs, imposes substantial limitations on the capacity of said known chains to follow curves that develop in the plane of the links.

This is due to the fact that when the radius of the curves decreases, the aperture between the projecting elements that define the teeth of the link decreases in correspondence, which limits the meshing capacity of said links, and thus too the capacity of said links to oscillate in their plane as described.

Another conveyor claim is shown in GB-A-2056400 wherein the links are shaped like a sort of fork whose aperture is closed, from the active part of the link, by a monolithic plate and where said links are connected by means of pins that are situated transversally to the arms of said forks, and that are inserted in respective seats of articulation and oscillation situated on the crosspieces of said forks.

The links are so shaped that the drawing pinion has a plurality of teeth having a saw-tooth shape.

The teeth of the pinion cannot be placed at a relatively small distance one to the other, as they could became too week so that the pinion must have a relatively large radius.

Furtherly, the entrance and exit of the links to the pinion result to be very hard and the functioning very uneven.

Nevertheless, modem processing lines have a great need for conveyor chains that are able to follow quite sharp curves both in the plane of the links and at a right angle to said plane, and this obviously in the full respect of their functionality.

Despite the many attempts made to resolve this problem, satisfactory levels have not yet been reached.

This also in consideration of the fact that similar known chains result in being difficult to guide with the necessary precision when said chains follow curves contained in the plane of the links, which often leads to undesired vibration and noise. In addition, the known chains are relatively complicated and costly, in particular due to the presence of said projecting elements that form the teeth of the links, and of said cylindrical bodies taken into said bushes.

The main objective of this present invention is to make available a conveyor chain that is able to satisfy the need mentioned first, and to overcome the problems described afterward.

Said objective is met by a chain such as that described in the enclosed claims.

Each terminal part of the arms of the link has an outwardly convex surface shaped like a portion of a cylinder, having generating lines perpendicular to said plate and having a curved profile, which defines a tooth able to mate the openings of a drawing pinion rotating around a vertical axis, said portion extending on one side and on the other of the opening for the pin.

In this way, the objectives of this present invention are reached.

In fact, given that the teeth of the link used for drawing the chain according to curves in the plane of the links are made available by the arms of the fork, this makes it possible to eliminate the projecting elements as per the known technique, and thus to overcome the aforementioned limitations.

As a consequence, the chain can be wound on drawing pinions of relatively small diameter, and thus follow quite sharp curves (parallel to the lying plane of the link) which is difficult to obtain with the majority of known chains.

In addition, with the chains as per this present invention, a precision and smoothness of functioning is obtained which is far superior to that of the known conveyor chains, as was found by means of comparison. This above all in consideration of the fact that associated to the sides of the arms of the fork which form, as mentioned, the meshing teeth of the chain, there are surfaces that supply a good support for the lateral guide of the link both on curves and in a straight line.

In addition, the chain as per this present invention is less complex and costly than the known chains given that, as already mentioned, said projecting elements and said cylindrical bodies are eliminated.

The characteristics and constructive advantages of this present invention are evident from the detailed description that follows, given with reference to the enclosed drawings of which:
Fig. 1 is a top view of a tract of curve of a conveyor chain as per this present invention;
Fig. 2 is the II-II section of Fig. 1;
Fig. 3 shows a link of chain according to a plan view from the part of the active zone or conveying zone of the chain;
Fig. 4 is the view obtained from the direction IV as per Fig. 3, in enlarged scale;
Fig. 5 is the V-V section marked in Fig. 4, and in the right part of said drawing is a longitudinal view and a transversal view in section of the pin of articulation between the links
Fig. 6 is the VI-VI section marked in Fig. 3; and
Fig. 7 is the view obtained according to the direction VII shown in Fig. 3.

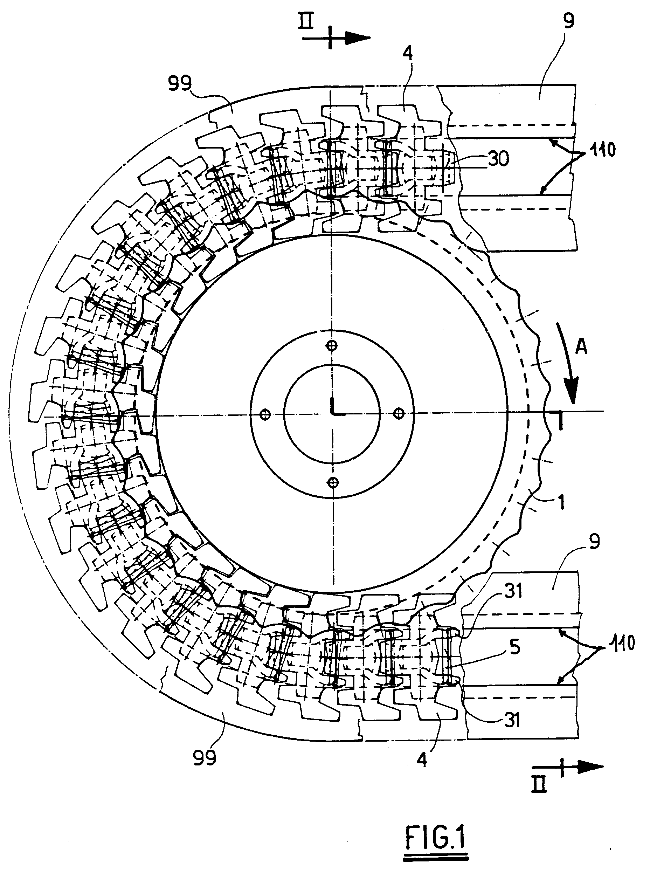

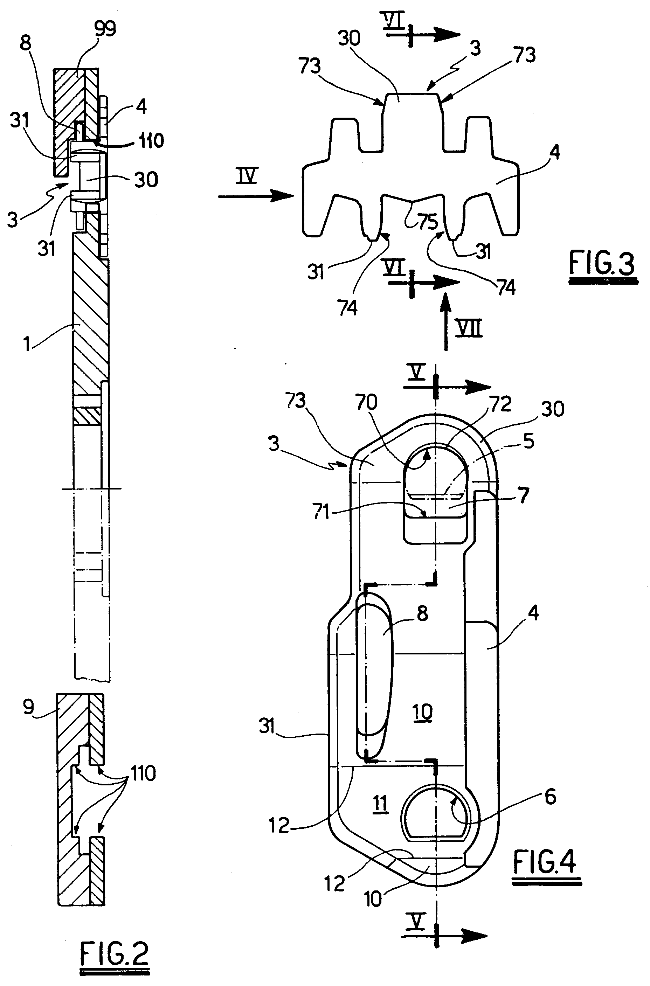

From said figures, see in particular Figures 1 and 2, there is a drawing pinion 1 with vertical axis for drawing a conveyor chain as per this present invention. The pinion 1 is commanded to rotate in the direction shown by A, and this same pinion 1 presents, in this specific case, twenty-eight teeth.

In addition, respective bilateral guides 9 are associated to the forward and return tracts of the chain, while an external monolateral guide 99 is associated to the curved tract of said chain.

We will return to guides 9 and 99 further on.

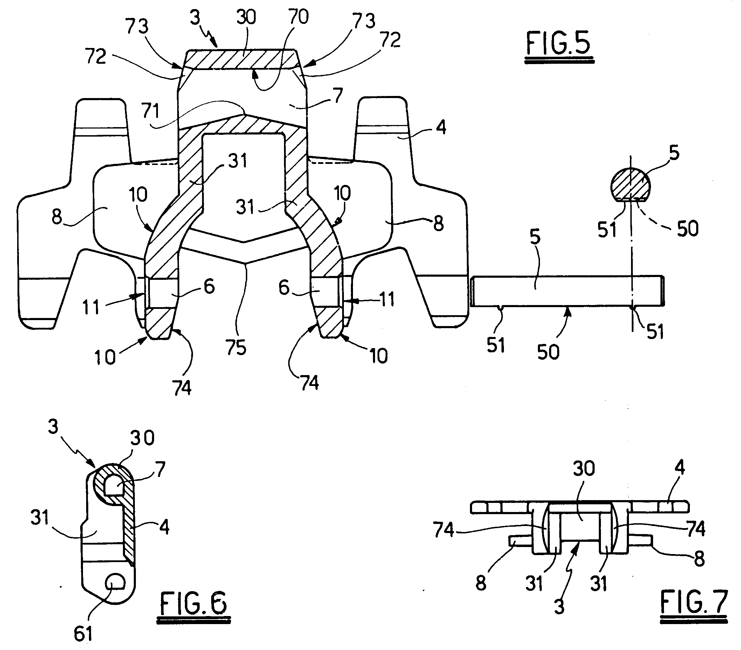

As is well illustrated in Fig. 5, each individual link includes a basic body 3 that is fork-shaped, and the aperature of said fork is partially closed by a shaped monolithic plate 4.

Said plate 4 defines the active surface of the conveyor chain, and has an elongated form situated transversally to the axis of symmetry of said fork.

In addition, the front and rear edges of said plate 4 have respective toothings that are reciprocally staggered, which are used for stablizing, in combination with the toothing of the adjacent links, the continuity of the active surface of the chain even when said chain follows curves (for example horizontal) such as that illustrated in Fig. 1.

The crosspiece of said fork consists of a bush 30 that is taken in between the arms 31 of the fork of the subsequent link.

Said bush 30 is radiused to the outer face of the plate 4 (see Fig. 6), and said bush 30 forms the tooth of the link that is inserted in the openings of a drawing pinion (not illustrated) to give the chain a curvature contained in a plane (for example vertical) that is at a right angle to the lying plane of the links. This has not been illustrated as it is easy to understand from the enclosed figures.

The reciprocal connection between each pair of links is made by a transverse pin 5 that is well illustrated in the right side of Fig. 5.

Said pin 5 consists of a cylindrical rod that has a longitudinal flattening 50 from which rise two small transverse terminal ribbings 51 opposite one another.

In particular, said flattening 50 subtends an angle of approximately 115°, and the sides of said ribbing 51 are appropriately bevelled.

The terminal parts of the pin 5 are destined to be blocked in respective coaxial openings 6 that are formed in the free ends of the arms 31 of one link of said pair, while the central part of said pin 5 is destined to be inserted in a seat 7 of articulation and oscillation that is formed in the bush 30 of the other link of said pair.

In particular, the section of said openings 6 is practically coincident to the section of pin 5, with the exclusion of the ribbings 51.

In addition, the length of said pin 5 is slightly less than the maximum distance existing between the outer sides of the arms 31, and the distance existing between the outer sides of the two ribbings 51 is substantially equal to the distance existing between the inner sides of said arms.

In this way, said pin 5 is blocked both torsionally and axially with respect to the arms 31, with the flattening 50 orientated toward the free ends of said arms.

In addition, see Figures 4 and 5, for the forced insertion of said pin 5 in said openings 6, the mouths of said openings are appropriately bevelled.

As concerns said seat 7 of articulation and osciallation, well illustrated in Figures 4, 5, and 6, said seat has a shaped form, like a slot with narrowing in the center. Said sort of slot is contained in a plane that is parallel to the lying plane of the link, and the width of said slot is slightly greater than the diameter of pin 5.

In addition, the terminal walls of said seat 7 that are turned toward the cylindrical and flat parts 50 respectively of pin 5 are shaped, respectively, like a semicylindrical surface 70 (Fig. 3, 6) and like a symmetrical cusp 71 (Fig. 4).

In particular, said cusp 71 is defined by two inclined planes arranged according to a very open "V", whose opening is turned toward the arms 31 (Fig. 4).

On the opposite ends of said semicylindrical surface 70, two bevels 72 correspond to said inclined planes, the inclination of which are equal to and opposite those of the two facing inclined planes (Fig. 4). In addition, the distance between the generating line of said semicylindrical surface 70 and the vertex of said cusp 71 is slightly greater than the diameter of pin 5. This in order to permit the chain to follow curves like that illustrated in Fig. 1, as well as to prevent interference when the chain follows curves (not illustrated) contained in planes that are at a right angle to the lying plane of the links.

Furthermore to the purpose of permitting the chain to follow curves such as that illustrated in Fig. 1, at the head of bush 30 there are two lateral bevels 73 opposite one another, the free ends of the arms 31 have respective bevels 74 on the inner side, and the portion 75 of plate 4 that is included between said two arms 31 has a pointed shape (Fig. 3, 5).

Finally, on the outer sides of said arms 31, there are two shaped fins 8 that are substantially parallel to the plate 4 (see Fig. 2, 4), and which have radiused edges and corners.

Said fins 8 have the function of guiding chain and preventing disengagement when said chain follows curves that develop on planes at a right angle to the lying planes of the links.

In particular, said fins 8 are placed at a certain distance from the edges of the arms 31 which are opposite those for attachment of said plate 4, and said fins 8 are included between said seat 7 and openings 6 (see Fig. 4, 5).

As is well illustrated in Fig. 5, said arms 31 have terminal parts that are wide apart, and the outer sides of said terminal parts are shaped, according to a plan view, like a portion 10 of cylindrical surface.

In addition, from Figures 1, 4, and 5, it can be noted that the cylindrical portion 10 extends from one part and from the other of the respective opening 6, and its generating lines are at a right angle to plate 4.

As per this present invention, said cylindrical portion 10 constitutes the tooth of the link that engages the openings of the drawing pinion 1, as illustrated in Fig. 1.

In addition, said cylindrical portion 10 is interrupted by a flat part 11 that is at a right angle to the longitudinal axis of the respective opening 6 (Fig. 5, 7), and that circumscribes the outer mouth of the latter (Fig. 4). It should also be noted that said flat part 11 is also included in the zone that is situated beyond the fins 8 (Fig. 4), and the lines of intersection between said cylindrical portion 10 and said flat part 11 are shown with the number 12 in Fig. 4.

The function of said flat part 11 is that of making available a lateral support zone for the link against the surfaces 110 of movement and retaining of the bilateral straight guides 9 (see Fig. 1, 2), and said intersection lines 12 make available two lateral zones of support for said link against the surfaces 110 of movement and retaining of the monolateral curved guides 99.

The value and advantages of this present invention are clearly comprehensible from the previous description and from an examination of the enclosed figures.

## Claims

1. Conveyor chain, able to follow particularly sharp curves that develop both in the conveying plane and parallel to said plane, of the type including multiple links that are shaped like a sort of fork (3) whose aperture is closed, from the active part of the link, by a monolithic plate (4), and where said links are connected by means of pins (5) that are situated transversally to the arms (31) of said forks, and that are inserted in respective seats (7) of articulation and oscillation situated on the crosspieces (30) of said forks, characterised in that each terminal part of said arms (31) has an outwardly convex surface shaped like a portion (10) of a cylinder, having generating lines perpendicular to said plate (4) and having a curved profile, which defines a tooth able to mate the openings of a drawing pinion (1) rotating around a vertical axis, said portion (10) extending on one side and on the other of the opening (6) for the pin (5).

2. Chain according to claim 1, characterized in that said cylindrical portion (10) is interrupted by a flat part (11) which circumscribes the outer mouth of the opening (6) and is perpendicular to the axis of said opening (6), said flat part (11) defining a lateral support zone mating with the inner surfaces of bilateral straight guides (9).

## Patentansprüche

1. Förderkette, die in der Lage ist, insbesondere scharfen Kurven zu folgen, die sich sowohl in der Förderebene als auch parallel zu dieser Ebene entwickeln bzw. erstrecken, von der Art, welche Mehrfachglieder aufweist, die in der Art einer Gabel geformt sind, deren Öffnung von dem aktiven Teil des Gliedes durch eine monolithische Platte (4) verschlossen ist, und bei der die Glieder durch Stifte (5) verbunden sind, welche in Querrichtung zu den Armen (31) der Gabel angeordnet sind, und welche in entsprechende Gelenk- und Oszillationsaufnahmen (7) eingeführt sind, welche auf den Querträgern (30) der Gabeln angeordnet sind,
**dadurch gekennzeichnet, daß**
jeder Endabschnitt der Arme eine nach außen konvexe Oberfläche aufweist, die wie ein Abschnitt (10) eines Zylinders geformt ist, mit Erzeugenden senkrecht zu der Platte (4) und mit einem kurvenartigen Profil, welches einen Zahn festlegt, der in der Lage ist, sich mit den Öffnungen eines gezogenen bzw. Zug-Ritzels (1) zu paaren, welches um eine vertikale Achse rotiert, wobei der Abschnitt (10) sich auf einer Seite und auf der anderen Seite der Öffnung (6) für den Stift (5) erstreckt.

2. Kette nach Anspruch 1,
**dadurch gekennzeichnet, daß**
der zylindrische Abschnitt (10) durch einen flachen Teil (11) unterbrochen wird, der den äußeren Trichter der Öffnung (6) umschreibt und der senkrecht zu der Achse der Öffnung (6) ist, wobei der flache Teil (11) einen Seitenanlagebereich festlegt, welcher sich mit der inneren Oberfläche von doppelseitigen geraden Führungen (9) paart.

## Revendications

1. Chaîne de convoyeur, susceptible de suivre des courbes particulièrement brusques qui se développent à la fois dans le plan de convoyage et parallèlement audit plan, du type comprenant des maillons multiples qui sont conformés comme une sorte de fourche (3) dont l'ouverture est fermée, à partir de la partie active du maillon, par une plaque monolithe (4), et dans laquelle lesdits maillons sont connectés aux moyens de goupilles (5) qui sont situées transversalement par rapport aux bras (31) desdites fourches, et qui sont introduites dans des sièges respectifs (7) d'articulation et d'oscillation situés sur les pièces de traverse (30) desdites fourches, caractérisée en ce que chaque partie terminale desdits bras (31) comporte une surface convexe vers l'extérieur conformée comme une partie (10) de cylindre, ayant des lignes génératrices perpendiculaires à ladite plaque (4) et ayant un profil courbe, qui définit une dent susceptible d'épouser les ouvertures d'un pignon de traction (1) qui tourne autour d'un axe vertical, ladite partie (10) s'étendant sur un côté et sur l'autre de l'ouverture (6) pour la goupille (5).

2. Chaîne selon la revendication 1, caractérisée en ce que ladite partie cylindrique (10) est interrompue par une partie plate (11) qui circonscrit l'embouchure extérieure de l'ouverture (6), et est perpendiculaire à l'axe de ladite ouverture (6), ladite partie plate (11) définissant une zone de support latérale qui épouse les surfaces internes de guides bilatéraux droits (9).
